(19) Europäisches Patentamt
European Patent Office
Office européen des brevets

(11) **EP 1 520 165 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(51) Int Cl.:
***G01N 21/71*** *(2006.01)*

(21) Anmeldenummer: 03761506.9

(86) Internationale Anmeldenummer:
**PCT/EP2003/006705**

(22) Anmeldetag: **25.06.2003**

(87) Internationale Veröffentlichungsnummer:
**WO 2004/003528 (08.01.2004 Gazette 2004/02)**

(54) **VERFAHREN UND VORRICHTUNG ZUR DURCHFÜHRUNG DER EMISSIONSSPEKTROMETRIE**

METHOD AND DEVICE FOR CARRYING OUT EMISSION SPECTROMETRY

PROCEDE ET DISPOSITIF DE SPECTROMETRIE D'EMISSION

(84) Benannte Vertragsstaaten:
**AT BE BG CH CY CZ DE DK EE ES FI FR GB GR HU IE IT LI LU MC NL PT RO SE SI SK TR**

(30) Priorität: **01.07.2002 DE 10229498**

(43) Veröffentlichungstag der Anmeldung:
**06.04.2005 Patentblatt 2005/14**

(73) Patentinhaber: **Fraunhofer-Gesellschaft zur Förderung der angewandten Forschung e.V. 80686 München (DE)**

(72) Erfinder:
• **NOLL, Reinhard 52066 Aachen (DE)**
• **STEPPUTAT, Michael 83278 Traunstein (DE)**

(74) Vertreter: **Gagel, Roland Patentanwalt Dr. Roland Gagel Landsberger Strasse 480a 81241 München (DE)**

(56) Entgegenhaltungen:
DE-A- 4 128 176          DE-A- 4 426 475
US-A- 5 042 947          US-A- 5 702 550

• STEPPUTAT M ET AL: "High-Speed Detection of Additives in Technical Polymers with Laser-Induced Breakdown Spectrometry" VDI-BERICHTE, ANWENDUNGEN UND TRENDS IN DER OPTISCHEN ANALYSENMESSTECHNIK, Bd. 1667, 2002, Seiten 35-40, XP001155758 Frankfurt, 26.-27.02.2002 in der Anmeldung erwähnt

## Beschreibung

Die Erfindung betrifft ein Verfahren und eine Vorrichtung zur quantitativen und qualitativen Multi-Elementanalyse von bewegten Messobjekten mit der Emissionsspektrometrie, vorzugsweise der Laser-Emissionspektrometrie.

## Stand der Technik

Bei der Laser-Emissionsspektrometrie wird die Konzentration einzelner chemischer Elemente in einer Probe dadurch bestimmt, dass mit Hilfe eines fokussierten Laserstrahls ein Plasma auf der Oberfläche des Messobjekts erzeugt wird, und die Konzentration des betrachteten Elements in der Probe unter Verwendung der elementspezifischen Emissionen des laserinduzierten Plasmas bestimmt wird.

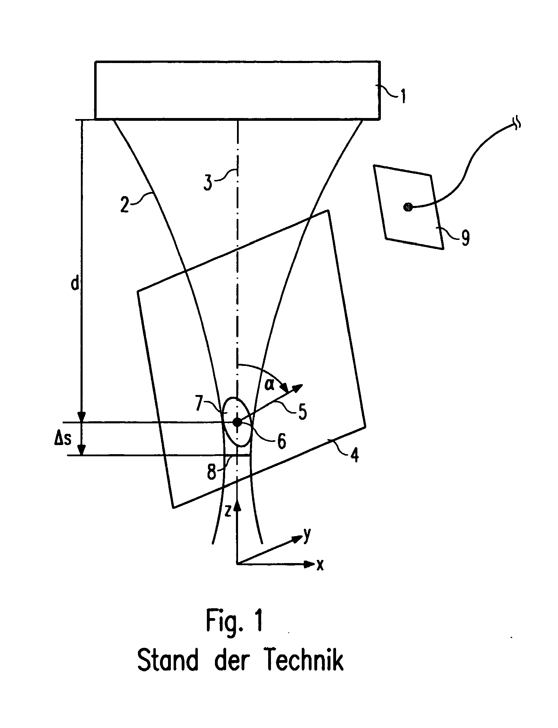

In Fig. 1 sind die bei der Erzeugung des laserinduzierten Plasmas auf der Oberfläche des Messobjekts bedeutsamen Größen dargestellt. Eine Fokussieroptik 1 fokussiert einen gepulsten Laserstrahl 2 mit der Propagationsrichtung 3 auf ein Oberflächenelement 4 des Messobjekts. Das Koordinatensystem ist so gewählt, dass die Propagationsrichtung 3 des Laserstrahls 2 antiparallel zur z-Achse verläuft. Die Normale 5 des Oberflächenelements 4 schließt mit der z-Achse bzw. der Laserstrahlachse einen Winkel $\alpha$ ein. Der Durchstoßpunkt 6 der Propagationsrichtung 3 mit dem Oberflächenelement 4 ist das Zentrum der Projektion 7 des Laserstrahlquerschnitts auf das Flächenelement 4. Der Abstand der Fokusebene 8 des Laserstrahls 2 vom Durchstoßpunkt 6 wird mit $\Delta s$ bezeichnet. Liegt die Fokusebene 8 von der Fokussieroptik aus gesehen hinter dem Durchstoßpunkt 6, so entspricht dies positiven Werten für $\Delta s$. Typischerweise wird $\Delta s$ positiv gewählt. Der Abstand der Fokussieroptik 1 vom Durchstoßpunkt 6 werde mit d bezeichnet.

Die Emission des entstehenden laserinduzierten Plasmas am Ort 6 wird von der Empfangsoptik der Detektoreinheit 9 gesammelt und in ein Spektrometer geführt. Die Detektoreinheit des Spektrometers bestimmt hierbei für ein definiertes Zeitfenster die zeitintegrierte Emission der betrachteten Spektrallinien. Für jedes Analytelement wird dann mit Hilfe einer Kalibrierfunktion aus den abschnittsweise zeitlich integrierten Emissionen der betrachteten Spektrallinien die Konzentration des Analyten in der Probe bestimmt. Hierzu ist es bekannt, die Eingangsgröße der Kalibrierfunktion aus dem Verhältnis der Emission einer betrachteten Analytlinie zu einer Kombination der Emissionen anderer Spektrallinien bzw. eines für die Gesamtemission des Plasmas repräsentativen Messsignals zu berechnen.

Die Laser-Emissionsspektrometrie kann wahlweise mit fester oder mit variabler Brennweite der Fokussieroptik betrieben werden.

Bei der Laser-Emissionsspektrometrie mit Fokussieroptiken festgehaltener Brennweite muss das Messobjekt bis auf wenige Millimeter genau positioniert werden, um mittels einer zuvor erstellten Kalibrierung eine quantitative Aussage über Analytkonzentrationen im Material des Messobjekts zu gewinnen. Bei einer Änderung der Probenposition relativ zur feststehenden Fokuslage des Laserstrahls oder einer Änderung der Neigung des Oberflächenelements 4 ändert sich der detektierte Raumwinkel der Plasmaemission bedingt durch den veränderten Abstand der Probenoberfläche zur festgehaltenen Position der Empfangsoptik der Detektoreinheit 9 oder durch eine partielle Abschattung des laserinduzierten Plasmas durch das Messobjekt. Diese Veränderung kann teilweise dadurch kompensiert werden, dass das Verhältnis des Messsignals der betrachteten Emissionslinie zu einer Kombination von anderen Linienemissionssignalen und einem zur Gesamtemission des betrachteten Plasmas proportionalen Signals ausgewertet wird. Dieses Verfahren wird als "Referenzierung" oder "interne Standardisierung" bezeichnet.

Ein weiterer systematischer Fehler ergibt sich ferner aus einer veränderten Charakteristik der Emission des laserinduzierten Plasmas. Eine quantitative Aussage über Analytkonzentrationen im Material des Messobjekts wird dadurch erschwert oder unmöglich gemacht bzw. die gemessene Analytkonzentration ist fehlerbehaftet.

Die letztgenannte Fehlerursache kann zum Teil durch den Einsatz einer Autofokuseinheit in Verbindung mit einem gepulsten Laser festgehaltener Repetitionsrate behoben werden, so wie es M. Stepputat et. al, VDI-Berichte, 1667, 35-40 (2002) lehren. Die Autoren schlagen hierbei vor, in der Autofokuseinheit den Abstand zur Probenoberfläche mit einem Laser-Triangulationssensor zu bestimmen und die Fokuslage des Analyselasers auf diesen Abstand einzustellen. In dieser Anordnung sind der Laserstrahl der Triangulationseinheit und der Laserstrahl des Analyselasers koaxial angeordnet.

## Darstellung der Erfindung

Der Erfindung liegt das technische Problem zugrunde, ein Verfahren und eine Vorrichtung zur Emissionsspektrometrie, insbesondere der Laser-Emissionsspektrometrie, mit verbesserter Messgenauigkeit bereitzustellen, und zwar insbesondere für die emissionsspektrometrische Erfassung bewegter Objekte.

Der Lösung dieses technischen Problems erfolgt durch die Merkmale der unabhängigen Ansprüche. Vorteilhafte Weiterbildungen werden durch die abhängigen Ansprüche angegeben.

Erfindungsgemäß wurde erkannt, dass sich dieses technische Problem durch ein Verfahren lösen lässt, dass vor der Plasma-Generierung neben dem Abstand d der Autofokussieroptik zur Werkstückoberfläche zusätzliche Geometrie-Parameter P1, P2 .. PN eines potentiellen Messortes auf der Werkstückoberfläche bestimmt werden, und nur für diejenigen potentiellen Messorte eine Elementanalyse durchgeführt wird, bei denen sich mindestens einer der zusätzlichen Geometrie-Parameter innerhalb eines vorgegebenen Toleranzbereichs [T1 .. T2] befindet.

Die vorgeschlagene Lösung beruht auf der Erkenntnis, dass nach dem Stand der Technik stets auch Messorte auf dem Messobjekt erfasst werden, deren Oberfläche in geometrischer Hinsicht ungeeignet für eine quantitative Messung ist. Eine möglichst genaue Messung setzt nämlich voraus, dass die geometrische Beschaffenheit des Messortes weitgehend identisch zu derjenigen ist, welche bei der Aufnahme der Kalibrierkurve vorgelegen hat. Wurde die Kalibrierkurve bei Geometrie-Parametern P1, P2 .. PN gemessen, so erfüllt sie nämlich nur dann ihre Sollfunktion der Kalibrierung exakt, wenn - bei ansonsten festgehaltenen Parametern, wie insbesondere den Laserparametern - bei der Vermessung eines Messobjekts dieselben Geometrie-Parameter vorliegen.

In Annäherung an dieses Optimum wird in diesem Sinne vorgeschlagen, dass in einem ersten Schritt ein Toleranzbereich [T1 .. T2] für die Geometrie-Parameter P1, P2 .. PN vorgegeben wird, welche jeweils die bei der Kalibriermessung vorgelegenen Geometrie-Parameter möglichst gut repräsentieren. Mit anderen Worten sollen die vorgegebenen Geometrie-Parameter bezüglich Art und Toleranzbereich denjenigen Geometrie-Parametern entsprechen, bei denen die Kalibrierkurve aufgenommen wurde. Die Breite des Toleranzbereichs der Geometrie-Parameter ergibt sich aus den Anforderungen der Applikation an die Genauigkeit der Konzentrationsbestimmung und aus der Beschränkung durch die verwendeten Komponenten.

In einem zweiten Schritt werden dieselben Geometrie-Parameter P1, P2 .. PN an potentiellen Messorten des Werkstücks gemessen.

Im Autofokusbetrieb wird ohnehin fortlaufend als ein Geometrie-Parameter der Abstand d der Autofokussieroptik zur Werkstückoberfläche bestimmt. Im Sinne der vorliegenden Erfindung wird daher nur für diejenigen potentiellen Messorte eine Elementanalyse durchgeführt, bei denen sich mindestens einer der zusätzlichen Geometrie-Parameter innerhalb eines vorgegebenen Toleranzbereichs [T1 .. T2] befindet.

Vorzugsweise ist einer der Geometrie-Parameter der Abstand d zwischen Fokussieroptik und Werkstückoberfläche. Auch dieser Abstand d sollte in diesem Sinne innerhalb eines durch die Kalibriermessung definierten Toleranzbereiches liegen wobei hervorgehoben werden soll, dass der Toleranzbereich für den Parameter d unabhängig von dem Bereich ist, innerhalb dessen die Autofokuseinrichtung noch zuverlässig arbeitet.

Es ist ferner von Vorteil, wenn als Geometrie-Parameter die am potentiellen Messort vorliegende Neigung $\alpha$ der Werkstückoberfläche bzgl. der Laserstrahlachse bestimmt wird. Durch die Einstellung dieses Parameters innerhalb eines Toleranzbereichs wird explizit berücksichtigt, dass das Emissionsspektrum des Plasmas von der Neigung am Messort abhängig ist. Die systematische Berücksichtigung dieser Abhängigkeit führt wunschgemäß zu einer Steigerung der Messgenauigkeit.

Gemäß vorstehenden Ausführungen sollte die relevanten Geometrie-Parameter d und $\alpha$ innerhalb eines Toleranzbereichs liegen:

$$d_u \leq d \leq d_o$$

$$-\alpha_{max} \leq \alpha \leq \alpha_{max}$$

Diese Parameter definieren insofern ein Prozessfenster hinsichtlich der Geometrie-Parameter innerhalb dessen die Emissionsspektrometrie betrieben wird. Selbstverständlich kann diese Vorgehensweise bei Bedarf auch auf mehr relevante Geometrie-Parameter verallgemeinert werden.

Um zu verifizieren, dass die Messorte tatsächlich Geometrie-Parameter innerhalb des Messfensters aufweisen ist vorgesehen, dass vor der Plasmainduzierung von zumindest einem Teilbereich der Werkstückoberfläche das Oberflächenprofil mittels eines Triangulationsverfahrens bestimmt wird, und aus dem Oberflächenprofil die zusätzlichen Geometrie-Parameter errechnet werden. Mit den auf diese Weise bestimmten Ist-Werten für die relevanten Geometrie-Parameter erfolgt ein Vergleich mit den vorgegebenen Sollwerten bzw. wird überprüft, ob mindestens ein Geometrie-Parameter des Messortes innerhalb des vorgegebenen Toleranzbereichs fällt. Die Genauigkeit des Messergebnisses wird zunehmend gesteigert, wenn alle Geometrie-Parameter innerhalb des Toleranzbereichs liegen.

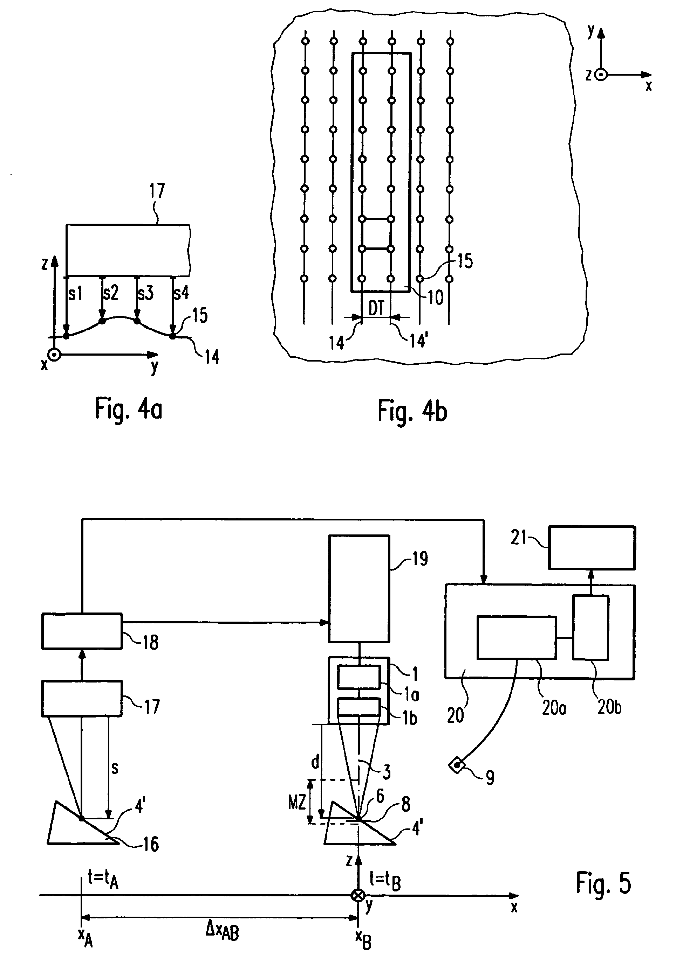

Um eine automatische Selektion geeigneter Messpunkte zu ermöglichen sind Mittel zur Vermessung der Probenoberfläche vorgesehen die auch quer zur Bewegungsrichtung des Messobjekts messen. So kann beispielsweise im erfindungsgemäßen Verfahren der Abstand d zwischen dem Oberflächenelement 4 und der Fokussieroptik 1 mit Hilfe einer Triangulationseinheit 17 bestimmt werden, siehe Fig. 4a. Die Anordnung der dabei erfassten Oberflächenpunkte 15 des Messobjekts ist in Fig. 4b schematisch dargestellt. Eine Triangulationseinheit 17 misst zeitgleich oder zeitlich hintereinander die senkrechten Abstände s1, s2, s3 etc. von einer Referenzebene zu diskreten Messpunkten 15, welche sich auf der Oberfläche des Messobjekts befinden. Die Triangulationseinheit kann beispielsweise durch einen laserbasierten Lichtschnitt-Sensor, eine Multi-Punkt-Tri-angulationseinheit oder mehrere Triangulationssensoren realisiert werden. Der Abstand DT der Linien 14 und 14' zueinander ist dabei durch die Messrate der Triangulationseinheit und die Geschwindigkeit der Oberfläche des Messobjekts 4' bestimmt. Der Verlauf der Probenoberfläche 4' zwischen den erfassten Triangulationsmesspunkten 15 wird durch Interpolation bestimmt.

Aus dem Vorstehenden ergibt sich, dass das erfindungsgemäße Verfahren mit Gewinn bei der Untersuchung bewegter Objekte eingesetzt werden kann. So kann eine Vermessung von Teilen auf einem Band erfolgen die sich am Analyselaser vorbeibewegen, so beispielsweise Aluminium- oder Elektroschrottteile.

Der Messbetrieb erfolgt derart, dass nur für diejenigen potentiellen Messorte eine Elementanalyse durchgeführt wird, bei denen sich mindestens einer der zusätzlichen Geometrie-Parameter innerhalb eines vorgegebenen Toleranzbereichs [T1 .. T2] befindet. Hierfür können entweder die Daten von ungeeigneten Messorten verworfen werden, oder aber es wird nur an denjenigen Orten ein Plasma induziert, an denen die vorbestimmten Geometrie-Parameter im Toleranzbereich liegen. Im letztgenannten Fall wird günstigerweise für den Fall, dass kein geeigneter Messort vorliegt, nur ein Pumppuls, aber kein Laserpuls ausgelöst. Die thermische Stabilität des Lasers wird dadurch erhöht.

Weiterhin kann vorgesehen sein, dass der Laserstrahl quer zur Bewegungsrichtung des Messobjekts abgelenkt wird. Auf diese Weise können nicht nur potentielle Messorte in Vorschubrichtung des Analyselasers gewählt werden, sondern auch Messorte senkrecht zu dieser Vorschubrichtung. Dies erhöht die Anzahl der verwertbaren Messpunkte auf der Oberfläche des Messobjekts, und erhöht so die Richtigkeit und Zuverlässigkeit der Analyse und der Identifikation.

Insbesondere bei kleinen, sich schnell relativ zum Laserstrahl bewegenden Messobjekten besteht die Gefahr, dass insgesamt nur wenig geeignete Messpunkte gefunden werden. Für diesen Fall ist das Messergebnis mit einem beachtlichen statistischen Fehler behaftet. Um die Messgenauigkeit zu steigern wird in einer bevorzugten Ausführungsform der Erfindung vorgeschlagen, dass die Laserstrahlbeaufschlagung mit variablem Pulsabstand $\Delta T$ vorgenommen wird.

Der Pulsabstand kann hierbei zunächst so gewählt werden, dass für eine größere Relativgeschwindigkeit zwischen Analyselaser und Messobjekt der Pulsabstand verkleinert wird, und für eine kleinere Relativgeschwindigkeit vergrößert wird. Ebenso kann für kleinere Messobjekte der Pulsabstand kleiner gewählt werden, um die Wahrscheinlichkeit zu erhöhen, eine Messung vornehmen zu können. Die dadurch erzielte größere Anzahl von ermöglichten Messungen verbessert die statistische Genauigkeit des Analyseergebnisses.

Bei der Pulsvariation wird ein Pulsabstand gewählt, dessen Wert innerhalb eines vorgegebenen Toleranzbereichs $[\Delta T_{min} ... \Delta T_{max}]$ liegt. Dies erhöht die Zuverlässigkeit und Stabilität des Systems.

Der zeitliche Abstand zwischen zwei Laserpulsen wird mit $\Delta T$ bezeichnet und ist typischerweise konstant. Er kann jedoch bei einem Lasersystem in einem eingeschränkten Bereich variiert werden. Mögliche Einschränkungen für den einzustellenden Pulsabstand und damit die momentane Repetitionsrate des Analyselasers können beispielsweise eine vergrößerte Streuung der Pulsenergie, eine Veränderung der thermischen Stabilität des Analyselasers und dadurch bedingte Änderungen des Strahlprofils oder der Strahlrichtung, oder eine Überschreitung der Grenzwerte der Pumpelektronik für die Erzeugung von Pumppulsen des Lasermediums sein.

Die Pulsvariation wird vorteilhafterweise derart vorgenommen, dass für den Fall, dass eine geeignete Erfassungseinrichtung wie beispielsweise eine Lichtschranke, eine Triangulationseinheit oder dergleichen ein Messobjekt erfasst, ein kleinerer Pulsabstand für den Analyselaser gewählt wird als für den Fall, dass kein Messobjekt erfasst wird. Diese Vorgehensweise führt dazu, dass bei Vorhandensein eines Messobjekts möglichst viele Messungen vorgenommen werden was die statistische Messgenauigkeit steigert. Erfasst der Analyselaser hingegen kein Messobjekt so wird der Pulsabstand vergrößert wodurch der Laser thermalisieren kann.

Bei der oben beschriebenen Erfassung zusätzlicher Geometrie-Parameter und der Durchführung einer Messung nur an denjenigen Orten, an denen mindestens einer der zusätzlichen Geometrie-Parameter innerhalb eines vorgegebenen Toleranzbereichs liegt, wird für den Fall, dass eine geeignete Messposition vom Analyselaser erfasst wird, ein kleinerer Pulsabstand gewählt als für den Fall, dass keine geeignete Messposition erfasst wird. Eine geeignete Messposition ist hierbei eine Messposition, deren vorgegebene Geometrie-Parameter innerhalb des vom Anwender gewählten Prozessfensters liegen. Optimal ist es daher zunächst, wenn im ersten Fall als Pulsabstand $\Delta T_{min}$ und im zweiten Fall $\Delta T_{max}$ gewählt wird.

Allerdings muss auch beachtet werden, dass im Falle eines längeren Laserbeschusses mit dem Pulsabstand $\Delta T_{min}$ bzw. maximaler Repetitionsrate der Laser thermisch stark belastet wird. Daher ist es zur Gewährleistung eines stabilen Systems erforderlich, den mittleren Pulsabstand $\Delta T$ auf den Sollwert $\Delta T_{soll}$ einzuregeln, wofür bekannte Regelverfahren eingesetzt werden können. Mit anderen Worten variiert der im zeitlichen Mittel vorliegende Pulsabstand $\Delta T_{mittel}$ um den Sollwert $\Delta T_{soll}$.

Ebenso ist vorgesehen, dass für den Fall, dass sich kein Messobjekt an der Messposition befindet, den Pulsabstand mit bekannten Regelverfahren auf den Sollwert $\Delta T_{soll}$ des Lasersystems einzuregeln. Der Sollwert $\Delta T_{soll}$ ist der Pulsabstand, der für den Betrieb mit festgehaltener Repetitionsrate spezifiziert ist. Befindet sich allerdings ein Messobjekt an der Messposition, wird der Pulsabstand für jeden Puls individuell gewählt. Dabei wird der Pulsabstand immer innerhalb eines system- und applikationsspezifischen Bereichs [$\Delta T_{min}$, $\Delta T_{max}$] eingestellt, welcher auch von den Pulsabständen der zuvor abgegebenen Pulse abhängt. Für jeden einzelnen Pulsabstand $\Delta T$ werden die möglichen Extremwerte $\Delta T_{min}$ und $\Delta T_{max}$ neu bestimmt, bzw. wird der Pulsabstand $\Delta T$ für jeden Puls individuell eingestellt. Dabei gehen die gerätebedingten Extremwerte $\Delta T_g^{min}$ und $\Delta T_g^{max}$ für einen einzelnen Pulsabstand $\Delta T$ sowie der mittlere Pulsabstand $\Delta T_{mittel,N}$ über die letzten N erzeugten Laserpulse ein. Die Pulsabstände $\Delta T$ der Laserpulse werden immer so gewählt, dass der mittlere Pulsabstand $\Delta T_{Mittel,N}$ über die letzten N Pulse immer einen Wert innerhalb des Bereichs [$\Delta T_{mittel,N}^{min}$, $\Delta T_{mittel,N}^{max}$] annimmt. Zusammengefasst kann dies durch folgende Ausdrücke beschrieben werden:

$$\Delta T \quad \in \quad [\Delta T_{min} \ , \ \Delta T_{max}]$$

$$\Delta T_{mittel, N} \in [\Delta T_{mittel,N}^{min}, \Delta T_{mittel,N}^{max}]$$

Befindet sich ein Messobjekt in Messposition, werden die Werte für $\Delta T_{min}$ und $\Delta T_{max}$ nach den folgenden Regeln bestimmt:

$$\Delta T_{min} = \Delta T_g^{min} \quad \text{für} \quad \Delta T_{mittel, N} > \Delta T_{mittel, N}^{min}$$

$$\Delta T_{min} = \Delta T_g^{max} \quad \text{für} \quad \Delta T_{mittel, N} \leq \Delta T_{mittel, N}^{min}$$

$$\Delta T_{max} = \Delta T_g^{max} \quad \text{für} \quad \Delta T_{mittel, N} < \Delta T_{mittel, N}^{max}$$

$$\Delta T_{max} = \Delta T_g^{min} \quad \text{für} \quad \Delta T_{mittel, N} \geq \Delta T_{mittel, N}^{max}$$

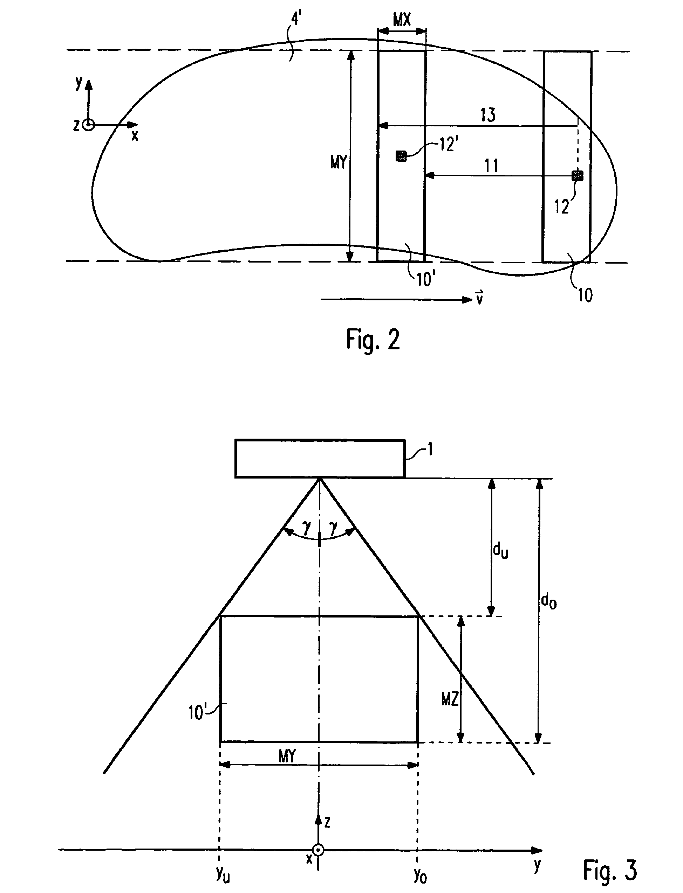

Die oben beschriebene Einschränkung der möglichen Pulsabstände $\Delta T$ führt dazu, dass bei einem Messobjekt, welches sich mit konstanter Geschwindigkeit v senkrecht zur Strahlpropagationsrichtung 3 an dem Analysesystem vorbeibewegt, nicht jeder beliebige Oberflächenpunkt auf der Probenoberfläche gemessen werden kann. Vielmehr ergibt sich das in Fig. 2 dargestellte Raster von möglichen Messbereichen 10 und 10' auf der Probenoberfläche 4'. Die Länge MX eines Messbereichs 10' ergibt sich aus den Beschränkungen der Pulsabstände $\Delta T$. Der Abstand 11 vom letzten Auftreffort 12 des Analyselasers 19 im Messbereich 10 zum Anfang des folgenden Messbereichs 10' ergibt sich aus dem minimal einstellbaren Pulsabstand $\Delta T_{min}$ in Verbindung mit der Geschwindigkeit des Messobjekts v zu $v \times \Delta T_{min}$. Analog ergibt sich das Ende des Messbereichs 10' in einem Abstand 13 von der Messposition 12 aus dem maximal einstellbaren Pulsabstand $\Delta T_{max}$ in Verbindung mit der Geschwindigkeit des Messobjekts v zu $v \times \Delta T_{max}$.

Fig. 3 zeigt beispielhaft den Messbereich 10' in der yz-Ebene in rechteckiger Gestalt. Die Höhe des Messbereichs 10' in z-Richtung wird mit MZ bezeichnet und ist durch die minimal und maximal einstellbaren Abstände $d_u$, und $d_o$ des Durchstoßpunktes 6 zur Fokussieroptik 1 gegeben. Die Breite MY des Messbereichs 10' ist durch den mit der Fokussieroptik maximal einstellbaren Strahlablenkwinkel $\gamma$ und den minimal einstellbaren Abstand $d_u$, als Grenze des vertikalen Fokussierbereichs MZ bestimmt. Die Breite MY ist dabei so gewählt, dass für jede y-Koordinate innerhalb MY innerhalb des maximalen Strahlablenkwinkels $\gamma$ jede vertikale Position z innerhalb des Fokussierbereichs MZ erreicht werden kann.

Es wird angestrebt, innerhalb des Messfensters 10' die nächstmögliche Messposition 12' so zu lokalisieren, dass die oben genannten Parameter Pulsabstand $\Delta T$, Abstand y, Abstand d und der Neigungswinkel $\alpha$ im Prozessfenster liegen, und die nächste Messung nur an dieser Position durchgeführt wird. Das Prozessfenster ist somit definiert als

$$d_u \leq d \leq d_o$$

$$-\alpha_{max} \leq \alpha \leq \alpha_{max}$$

$$y_u \leq y \leq y_o$$

$$\Delta T_{min} \leq \Delta T \leq \Delta T_{max}$$

Um den einzelnen Laserpuls an den so zu bestimmenden optimalen Messpositionen 12, 12' positionieren zu können, wird der Zeitpunkt der Erzeugung des Laserpulses durch die Systemsteuerung ermittelt und der Strahl des Analyselasers mit einer Strahlablenkeinheit quer zur Vorschubrichtung - d.h. in y-Richtung - positioniert. Durch dieses Verfahren wird die Anzahl der verwertbaren Messungen auf bewegten Teilen gegenüber dem Stand der Technik erheblich gesteigert.

Der Veranschaulichung der Verfahrensdurchführung dient Fig. 5. An der Position $x_A$ wird zum Zeitpunkt $t_A$ die Oberfläche 4' des Messobjekts 16 durch die Triangulationseinheit 17 erfasst. Für jede gemessene Linie 14 werden die Abstandswerte s der Triangulationsmesspunkte 15 zur Autofokus-Regelung 18 übertragen. Die Autofokus-Regelung bestimmt dann im nächsten gültigen Messbereich 10' mit Hilfe des interpolierten Oberflächenverlaufs den nächstmöglichen Messpunkt 12', dessen Parameter $\Delta T$, d und $\alpha$. im gültigen Prozessfenster liegen. Die Suche im nächsten Messfenster 10' nach einer Messposition 12' mit gültigem Prozessfenster wird dabei vorzugsweise von kleinen zu großen $\Delta T$ und dabei für jedes $\Delta T$ von kleinen zu großen Abständen zur y-Koordinate der Messposition 12 des vorhergehenden Messbereichs 10 gesucht. Somit werden Messpunkte bevorzugt, die im Rahmen des möglichen Messbereichs 10' einen minimalen räumlichen Abstand zum vorherigen Puls haben. Damit wird immer die im Rahmen der Applikation maximal mögliche Anzahl von Messpunkten 12, 12' auf der Probenoberfläche 4' realisiert.

Kann im Messbereich 10' keine Messposition 12' im Prozessfenster gefunden werden, wird ein Pumppuls des Lasers, aber kein Laserpuls ausgelöst. Der einzustellende Pulsabstand $\Delta T$ wird dabei folgendermaßen bestimmt:

$$\Delta T = \Delta T_g^{min} \quad \text{für} \quad \Delta T_{mittel,N} > \Delta T_{Soll}$$

$$\Delta T = \Delta T_g^{max} \quad \text{für} \quad \Delta T_{mittel,N} \leq \Delta T_{Soll}$$

Damit wird die thermische Stabilität des Lasersystems erhöht und gleichzeitig der mittlere Pulsabstand $\Delta T_{mittel,N}$ auf den Sollwert $\Delta T_{soll}$ geregelt. Wurden bereits für eine definierte Anzahl von Pulsen nur Pumppulse, aber keine Laserpulse ausgelöst, und soll erneut nur ein Pumppuls ausgelöst werden, so wird ein Laserpuls ausgelöst, dessen zugehörige Messwerte aber verworfen werden. Die thermische Stabilität des Lasers wird durch diese "Blindpulse" erhöht.

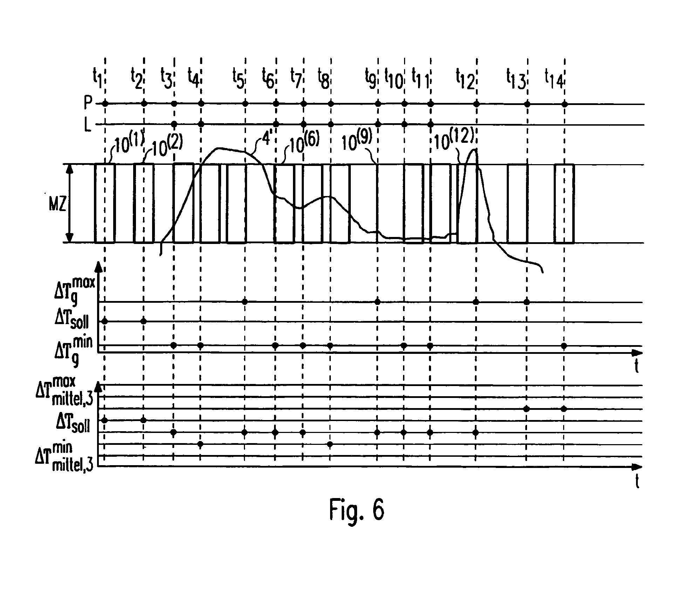

Fig. 6 zeigt die beschriebene Regelung der Pulsabstände für die Messung an einem Messobjekt exemplarisch in der xz-Ebene. Dabei ist die x-Achse durch eine äquivalente Zeitachse (t-Achse) wiedergegeben. Die Bezeichnung P steht für einen ausgelösten Pumppuls, L für einen ausgelösten Laserpuls. Zu den Zeitpunkten $t_1$ und $t_2$ befindet sich kein Messobjekt an der Messposition und die Pulsabstände werden zu $\Delta T_{soll}$ gewählt. Es werden Pumppulse P, aber keine Laserpulse L ausgelöst. Zu den Zeitpunkten $t_3$ und $t_4$ ist das Messobjekt in Position, die Oberfläche liegt in den Messbereichen $10^{3'}$, $10^{4'}$ und beide Pulsabstände werden zu $\Delta T_g^{min}$ gewählt. Dies soll möglichst viele aufeinanderfolgende Messungen ermöglichen. Es werden Pumppulse P und Laserpulse L ausgelöst. Zum Zeitpunkt $t_5$ kann keine Messposition im Messbereich $10^5$, gefunden werden und daher wird ein Pulsabstand von $\Delta T_g^{max}$ eingestellt. Es wird ein Pumppuls P, aber kein Laserpuls L ausgelöst. Zum Zeitpunkt $t_9$ sind bereits drei Messungen zu den Zeitpunkten $t_6$ bis $t_8$ mit einem Pulsabstand von $\Delta T_g^{min}$ durchgeführt worden und der mittlere Pulsabstand über drei Pulse hat bereits

den Grenzwert $\Delta T_{mittel,3}$ erreicht. Daher ergibt sich der minimal einstellbare Pulsabstand $\Delta T_{min}$ zu $\Delta T_g^{max}$ und der Pulsabstand $\Delta T$ kann nur zu $\Delta T_g^{max}$ eingestellt werden. Es wird eine geeignete Messposition gefunden, und es werden ein Pump- und ein Laserpuls mit einem Pulsabstand von $\Delta T_g^{max}$ ausgelöst. Zum Zeitpunkt $t_{12}$ kann im Messbereich $10^{12}{}'$ keine Position gefunden werden, deren Parameter im Prozessfenster liegen. Hier ist der Winkel $\alpha$ der Oberflächennormalen zu groß oder die Oberflächenelemente liegen außerhalb des vertikalen Messbereichs MZ. Da für die mittlere Pulsdauer $\Delta T_{mittel,3} < \Delta T_{Soll}$ gilt, wird der Pulsabstand auf $\Delta T_g^{max}$ gesetzt. Zum Zeitpunkt $t_{14}$ ist das Messobjekt nicht mehr an der Messposition und die Pulsabstände werden wieder auf $\Delta T_{soll}$ eingeregelt.

Für die ermittelte nächstmögliche Messposition 12' werden die Parameter $\Delta T$, y und d zum Zeitpunkt $t_B$ der Ankunft des Messobjekts 16 an der Messposition $x_B$ zur Fokussierung des Laserstrahls 2 durch die Fokussieroptik 1 auf die Oberfläche 4' des Messobjekts 16 genutzt. Die Fokussieroptik 1, bestehend aus der Autofokus-Optik 1a und der Strahlablenkeinheit 1b, fokussiert den Laserstrahl 2 des Analyselasers 19 an der Messposition $x_B$ auf die Probenoberfläche 4', siehe hierzu Fig. 5.

Zur Einstellung der Position des Laserfokus wird wie folgt vorgegangen. Der vertikale Abstand d wird durch die Autofokus-Optik 1a eingestellt. Der einstellbare vertikale Messbereich ist MZ. Die Stellgröße der Autofokus-Optik wird dabei so gewählt, dass $\Delta s$ über alle Messungen konstant ist. Die y-Koordinate der nächsten Messposition 12' wird durch die Strahlablenkungseinheit 1b eingestellt. Der einstellbare Bereich für diesen horizontalen Versatz ist MY. Die x-Koordinate der nächsten Messposition 12' wird durch den Zeitpunkt der Messung eingestellt. Die Länge des einstellbaren Messbereichs 10' ist MX.

Die Autofokus-Optik 1a kann zum Beispiel mit einem Doppellinsensystem, bestehend aus einer konkaven und einer konvexen Linse, realisiert werden, wobei der Abstand der Fokuslage zur Fokussieroptik 1 durch Bewegung der konkaven Linse parallel zur optischen Achse variiert werden kann. Die Ablenkeinheit 1b kann beispielsweise mittels eines X/Y-Scannersystems in Verbindung mit einem F-Theta Objektiv realisiert werden.

Die Emission des an der Messposition $x_B$ entstehenden laserinduzierten Plasmas 6 wird von der Empfangsoptik der Detektoreinheit 9 gesammelt und in ein Spektrometer 20 geführt. Die Empfangsoptik der Detektoreinheit 9 ist so gestaltet, dass Plasmaemissionen im gesamten Messbereich $MX \times MY$ detektiert werden können, vgl. Fig. 3. Dies kann beispielsweise durch ein Faserbündel erreicht werden, welches parallel zur y-Achse angeordnet am Messort einen linienförmigen Querschnitt besitzt, die Plasmaemission jedes möglichen Messorts detektieren kann, und dessen spektrometerseitiges Ende über die Querschnittswandlung auf den Eintrittsspalt des Spektrometers angepasst und vor diesem montiert ist. Die Dispersionseinheit 20a des Spektrometers 20 zerlegt die detektierte Plasmaemission spektral und die Detektoreinheit 20b des Spektrometers bestimmt für ein definiertes Zeitfenster die zeitintegrierte Emission der betrachteten Spektrallinien. Die durch den Winkel $\alpha$ bedingte Änderung der zeitintegrierten Plasmaemission aller betrachteten Linienemissionen gegenüber einem Fall von zum Beispiel $\alpha=0°$ wird durch eine Korrektur-Funktion $f(\alpha)$ korrigiert. Allgemeiner gesprochen wird für den Fall einer Abweichung eines gemessenen Neigungswinkels $\alpha$ von einem vorgegebenen Wert $\alpha_K$ eine Korrektur des Emissionsspektrums vorgenommen.

Die Konzentration jedes betrachteten Analyten in der Probe wird mit Hilfe einer Kalibrierfunktion bestimmt. Hierzu berechnet die Detektoreinheit 20b für jede laserinduzierte Plasmaemission die zu einer Analytlinie gehörigen referenzierten Einzelpulssignale. Diese berechnen sich aus dem Verhältnis der korrigierten zeitintegrierten Emission der betrachteten Analytlinie zu einer Kombination der anderen korrigierten Linienemissionen bzw. eines für die Gesamtemission des Plasmas repräsentativen Messsignals und dem durch die Triangulationseinheit 17 bestimmten vertikalen Abständen s1, s2, s3.... Alle Analytlinien, deren abschnittsweise zeitintegrierte Plasmaemission einen Wert außerhalb des jeweiligen Messbereichs einnehmen, werden verworfen. Für jede Analytlinie wird dann der Mittelwert aller zu dem Messobjekt 16 gehörigen referenzierten Einzelpulssignale gebildet. Die Konzentration des betrachteten Analyten in der Probe wird über eine Kalibrierfunktion bestimmt, in die alle gemittelten referenzierten Einzelpulssignale der zugehörigen Analytlinien eingehen. Die Gewichtung der gemittelten referenzierten Einzelpulssignale der verschiedenen Analytlinien in der Kalibrierfunktion hängt dabei von den Werten der gemittelten referenzierten Einzelpulssignale selbst ab.

Die so für jedes Messobjekt bestimmten Analytkonzentrationen werden von der Detektoreinheit 20b des Spektrometers an eine Anlagensteuerung 21 übertragen, welche diese beispielsweise zur Sortierung der Messobjekte, zur Verwechslungsprüfung oder zur Dokumentation für die Qualitätssicherung nutzt.

**Bezugszeichenliste**

1          Fokussieroptik

1a         Autofokus-Optik

1b         Strahlablenkeinheit

| 2 | Laserstrahl |
|---|---|
| 3 | Propagationsrichtung |
| 4 | Element der Probenoberfläche |
| 4' | Oberfläche der Probe |
| 5 | Oberflächennormale |
| 6 | Durchstoßpunkt |
| 7 | Projektion des Laserstrahlquerschnitts auf das Ober flächenelement |
| 8 | Fokusebene |
| 9 | Detektoreinheit |
| 10,10' | Messbereich |
| 11 | Abstand des letzten Messortes zum Anfang des folgenden Messbereichs |
| 12,12' | Messposition |
| 13 | Abstand des letzten Messortes zum Ende des folgenden Messbereichs |
| 14, 14' | Messlinien der Triangulationseinheit |
| 15 | durch die Triangulationseinheit erfasster Punkt der Probenoberfläche |
| 16 | Messobjekt |
| 17 | Triangulationseinheit |
| 18 | Autofokus-Regelung |
| 19 | Analyselaser |
| 20 | Spektrometer |
| 20a | Dispersionseinheit des Spektrometers |
| 20b | Detektoreinheit des Spektrometers |
| 21 | Anlagensteuerung |

**Patentansprüche**

1. Verfahren zur Durchführung der Emissionsspektrometrie, insbesondere der Laser-Emissionsspektrometrie, bei dem ein gepulster Laserstrahl zur Generierung eines laserinduzierten Plasmas automatisch auf ein Werkstück fokussiert wird,
bei dem die vom Plasma emittierte Strahlung detektiert und mit dem erfassten Strahlungsspektrum eine Elementanalyse durchgeführt wird,
**dadurch gekennzeichnet,**
**dass** vor der Plasma-Generierung neben dem Abstand d der Autofokussieroptik zur Werkstückoberfläche zusätzliche Geometrie-Parameter P1, P2 .. PN eines potentiellen Messortes auf der Werkstückoberfläche bestimmt werden,

und nur für diejenigen potentiellen Messorte eine Elementanalyse durchgeführt wird, bei denen sich mindestens einer der zusätzlichen Geometrie-Parameter innerhalb eines vorgegebenen Toleranzbereichs [T1 .. T2] befindet.

2. Verfahren nach Anspruch 1, **dadurch gekennzeichnet, dass** als Geometrie-Parameter der am potentiellen Messort vorliegende Neigungswinkel $\alpha$ der Werkstückoberfläche bzgl. der Laserstrahlachse bestimmt wird.

3. Verfahren nach Anspruch 2, **dadurch gekennzeichnet, dass** für den Fall einer Abweichung eines gemessenen Neigungswinkels $\alpha$ von einem vorgegebenen Wert $\alpha_K$ eine Korrektur des Emissionsspektrums vorgenommen wird

4. Verfahren nach einem der Ansprüche 1 bis 3, **dadurch gekennzeichnet, dass** vor der Plasmainduzierung von zumindest einem Teilbereich der Werkstückoberfläche das Oberflächenprofil mittels eines Triangulationsverfahrens bestimmt wird, und aus dem Oberflächenprofil die zusätzlichen Geometrie-Parameter errechnet werden.

5. Verfahren nach einem der Ansprüche 1 bis 4, **dadurch gekennzeichnet, dass** nur an denjenigen Orten ein Plasma induziert wird, an denen alle vorbestimmten Geometrie-Parameter im Toleranzbereich liegen.

6. Verfahren nach einem der Ansprüche 1 bis 5, **dadurch gekennzeichnet, dass** die vorgebenen Geometrie-Parameter bezüglich Art und Toleranzbereich denjenigen Geometrie-Parametern entsprechen, bei denen zuvor eine Kalibrierkurve aufgenommen wurde.

7. Verfahren nach einem der Ansprüche 1 bis 6, **dadurch gekennzeichnet, dass** der Laserstrahl quer zur Bewegungsrichtung des Messobjekts abgelenkt wird.

8. Verfahren nach einem der Ansprüche 1 bis 7, **dadurch gekennzeichnet, dass** bewegte Teile auf einem Band vermessen werden

9. Verfahren nach einem der Ansprüche 1 bis 8, **dadurch gekennzeichnet, dass** Aluminium- oder Elektroschrott vermessen wird.

10. Verfahren nach einem der Ansprüche 1 bis 9,
**dadurch gekennzeichnet,**
**dass** die Laserstrahlbeaufschlagung mit variablem Pulsabstand $\Delta T$ erfolgt, wobei die Werte von $\Delta T$ innerhalb eines vorgegebenen Toleranzbereichs [$\Delta T_{min} \dots \Delta T_{max}$] liegen und der im zeitlichen Mittel vorliegende Pulsabstand $\Delta T_{mittel}$ um einen Sollwert $\Delta T_{soll}$ variiert.

11. Verfahren nach Anspruch 10,
**dadurch gekennzeichnet,**
**dass** für den Fall, dass eine Erfassungseinrichtung ein Messobjekt erfasst, ein kleinerer Pulsabstand gewählt wird als für den Fall, dass kein Messobjekt erfasst wird.

12. Verfahren nach einem der Ansprüche 10 bis 11,
**dadurch gekennzeichnet,**
**dass** für den Fall, dass eine Erfassungseinrichtung kein Messobjekt erfasst, ein Pumppuls, aber kein Laserpuls ausgelöst wird.

13. Verfahren nach einem der Ansprüche 10 bis 12,
**dadurch gekennzeichnet,**
**dass** der Pulsabstand $\Delta T$ für jeden Puls individuell eingestellt wird.

14. Verfahren nach einem der Ansprüche 10 bis 13,
**dadurch gekennzeichnet,**
**dass** für jeden Puls die Grenzen des Toleranzbereichs $\Delta T_{min}$ bzw. $\Delta T_{max}$ individuell bestimmt werden.

15. Vorrichtung für die Emissionsspektrometrie, insbesondere für die Laser-Emissionsspektrometrie, mit einem Pulslaser zur Generierung eines laserinduzierten Plasmas auf einem relativ zum Laserstrahl bewegten Werkstück, einer Autofokuseinrichtung für den Laserstrahl, einem Detektor zur Erfassung der vom Plasma emittierten Strahlung, und mit einer Einrichtung zur Durchführung einer Elementsanalyse,
**dadurch gekennzeichnet,**

**dass** ein Mittel zur Vermessung des Probenoberflächenprofils quer zur Bewegungsrichtung des Messobjekts vorgesehen ist.

**Claims**

1.  A method for carrying out emission spectrometry, in particular laser emission spectrometry,
    in which a pulsed laser beam is focussed automatically on a workpiece to generate a laser-induced plasma,
    in which the radiation emitted by the plasma is detected and elemental analysis is performed with the detected radiation spectrum,
    **characterized in that**
    prior to generating the plasma, in addition to determining the distance d of the auto-focussing optic from the surface of said workpiece, additional geometry parameters P1, P2 .. PN of a potential measuring location on said workpiece surface are determined,
    and an elemental analysis is performed for only the potential measuring locations where at least one of said additional parameters lies within a predefined tolerance range [T1 .. T2].

2.  A method according to claim 1,
    **characterized in that** the angle of incline $\alpha$ of said workpiece surface to the axis of said laser beam present at the potential measuring location is determined as a geometric parameter.

3.  A method according to claim 2,
    **characterized in that** a correction of said emission spectrum is performed if a measured angle of incline $\alpha$ deviates from a predefined value $\alpha_K$.

4.  A method according to one of the claims 1 to 3,
    **characterized in that** prior to plasma inducement, a surface profile of at least part of said workpiece surface is determined by means of a triangulation process and from said surface profile said additional geometric parameters are calculated.

5.  A method according to one of the claims 1 to 4,
    **characterized in that** a plasma is induced only at those locations at which all said predefined geometric parameters lie within said tolerance range.

6.  A method according to one of the claims 1 to 5,
    **characterized in that** the predefined geometric parameters concerning type and tolerance range correspond to those geometric parameters of which a calibration curve had been plotted.

7.  A method according to one of the claims 1 to 6,
    **characterized in that** said laser beam is deflected transverse to the direction in which the test object is moving.

8.  A method according to one of the claims 1 to 7,
    **characterized in that** parts moving on a belt are measured.

9.  A method according to one of the claims 1 to 8,
    **characterized in that** scrap aluminum or scrap electric parts are measured.

10. A method according to one of the claims 1 to 9,
    **characterized in that** laser beam impingement occurs with an adjustable pulse interval $\Delta T$, wherein the $\Delta T$ values lie within a predefined tolerance range [$\Delta T_{min}$... $\Delta T_{max}$] and the pulse interval $\Delta T_{average}$ lying in temporal average varies around a desired value $\Delta T_{desired}$.

11. A method according to claim 10,
    **characterized in that** if a detection device detects a test object, a shorter pulse interval is selected than if no test object is detected.

12. A method according to one of the claims 10 to 11,
    **characterized in that** if a detection device detects no test object, a pump pulse is released but no laser pulse is released.

13. A method according to one of the claims 10 to 12,
**characterized in that** said pulse interval ΔT is set individually for each pulse.

14. A method according to one of the claims 10 to 13,
**characterized in that** the limits of said tolerance range $\Delta T_{min}$ respectively $\Delta T_{max}$ are determined individually for each pulse.

15. A device for emission spectrometry, in particular for laser emission spectrometry, comprising a pulse laser for generating a laser-induced plasma on a workpiece moving relative to the laser beam, an auto-focussing device for the laser beam, a detector for detecting the radiation emitted by the plasma and a device for carrying out elemental analysis,
**characterized in that** a means for measuring the sample surface profile transverse to the direction in which the test object is moving is provided.

**Revendications**

1. Procédé de réalisation de la spectrométrie d'émission, notamment de la spectrométrie d'émission laser,
dans lequel un rayon laser pulsé est focalisé automatiquement sur une pièce à usiner, pour la génération d'un plasma induit par laser,
dans lequel le rayonnement émis par le plasma est détecté et une analyse d'élément est réalisée avec le spectre de rayonnement détecté,
**caractérisé en ce que**,
avant la génération du plasma, hormis l'écart d entre l'optique d'auto focalisation et la surface de la pièce à usiner, des paramètres de géométrie supplémentaires P1, P2 .. PN d'un lieu de mesure potentiel sont déterminés sur la surface de la pièce à usiner,
et une analyse des éléments n'est réalisée que pour les lieux de mesure potentiels sur lesquels au moins l'un des paramètres de géométrie supplémentaire [T1 .. T2] se trouve dans une plage de tolérances prédéfinie [T1 .. T2].

2. Procédé selon la revendication 1, **caractérisé en ce que**
l'angle d'inclinaison α de la surface de la pièce à usiner par rapport à l'axe du rayon laser, présent sur le lieu de mesure potentiel est déterminé en tant que paramètre de géométrie.

3. Procédé selon la revendication 2, **caractérisé en ce que**
pour le cas d'une différence entre un angle d'inclinaison mesuré α et une valeur prédéfinie $\alpha_k$, il est procédé à une correction du spectre d'émission.

4. Procédé selon l'une quelconque des revendications 1 à 3, **caractérisé en ce que**, avant l'induction de plasma d'au moins une zone partielle de la surface de la pièce à usiner, le profil superficiel est déterminé au moyen d'un procédé de triangulation, et les paramètres de géométrie supplémentaires sont calculés à partir du profil superficiel.

5. Procédé selon l'une quelconque des revendications 1 à 4, **caractérisé en ce que**, un plasma n'est induit que sur les lieux, sur lesquels tous les paramètres de géométrie prédéfinis se situent dans la plage de tolérances.

6. Procédé selon l'une quelconque des revendications 1 à 5, **caractérisé en ce que** les paramètres de géométrie prédéfinis correspondent au niveau de leur type et de leur plage de tolérances aux paramètres de géométrie sur lesquels une courbe de calibrage a été précédemment relevée.

7. Procédé selon l'une quelconque des revendications 1 à 6, **caractérisé en ce que** le rayon laser est dévié à la transversale du sens de déplacement de l'objet à mesurer.

8. Procédé selon l'une quelconque des revendications 1 à 7, **caractérisé en ce que** des pièces déplacées sont mesurées sur une bande.

9. Procédé selon l'une quelconque des revendications 1 à 8, **caractérisé en ce qu'**on mesure des ferrailles d'aluminium ou des déchets électriques.

**10.** Procédé selon l'une quelconque des revendications 1 à 9, **caractérisé en ce que**,
l'application du rayon laser est assurée avec un intervalle d'impulsions $\Delta T$ variable, les valeurs de $\Delta T$ se situant dans une plage de tolérances prédéfinie [$\Delta T_{min}$... $\Delta T_{max}$] et l'intervalle d'impulsions $\Delta T_{moyen}$ présent dans une moyenne temporaire variant d'une valeur de consigne $\Delta T_{soll}$.

**11.** Procédé selon la revendication 10,
**caractérisé en ce que**,
dans le cas où un dispositif de détection détecte un objet à mesurer, il est choisi un intervalle d'impulsions plus petit que dans le cas où aucun objet à mesurer n'est détecté.

**12.** Procédé selon l'une quelconque des revendications 10 à 11, **caractérisé en ce que**,
dans le cas où un dispositif de détection ne détecte aucun objet à mesurer, c'est une impulsion de pompage, mais non pas une impulsion laser qui est déclenchée.

**13.** Procédé selon l'une quelconque des revendications 10 à 12, **caractérisé en ce que**,
on règle l'intervalle d'impulsions $\Delta T$ individuellement pour chaque impulsion.

**14.** Procédé selon l'une quelconque des revendications 10 à 13, **caractérisé en ce que**,
pour chaque impulsion, les limites de la plage de tolérances $\Delta T_{min}$, respectivement $\Delta T_{max}$ sont individuellement déterminées.

**15.** Dispositif pour la spectrométrie d'émission, notamment pour la spectrométrie d'émission laser, avec un laser à impulsions, pour la génération d'un plasma induit au laser, sur une pièce à usiner déplacée par rapport au rayon laser, un dispositif d'auto focalisation pour le rayon laser, un détecteur pour détecter le rayonnement émis par le laser et avec un système pour la réalisation de l'analyse d'éléments,
**caractérisé en ce que**,
il est prévu un moyen pour mesurer le profil superficiel de l'échantillon, à la transversale du sens de déplacement de l'objet à mesurer.

Fig. 1
Stand der Technik

## Fig. 2

## Fig. 3

Fig. 4a

Fig. 4b

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. STEPPUTAT.** *VDI-Berichte,* 2002, vol. 1667, 35-40